Europäisches Patentamt

European Patent Office

Office européen des brevets

(19)

(11) Publication number: **0 300 985**
**A1**

# EUROPEAN PATENT APPLICATION

(12)

(21) Application number: **88850187.1**

(22) Date of filing: **27.05.88**

(51) Int. Cl.⁴: **G 01 B 11/02**
**G 01 D 5/38**

(30) Priority: **03.06.87 SE 8702311**

(43) Date of publication of application:
**25.01.89 Bulletin 89/04**

(84) Designated Contracting States:
**CH DE GB IT LI NL**

(71) Applicant: **FACIT AKTIEBOLAG**
**S-172 91 Sundbyberg (SE)**

(72) Inventor: **Stänkelström, Anders**
**Lindhagensgatan 69**
**S-112 43 Stockholm (SE)**

**Almgren, Magnus**
**Kungsvägen 19 A**
**S-191 45 Sollentuna (SE)**

**Eriksson, Per-Olof**
**Kammakargatan 40**
**S-111 60 Stockholm (SE)**

(74) Representative: **Onn, Thorsten et al**
**AB Stockholms Patentbyra Zacco & Bruhn P.O. Box 3129**
**S-103 62 Stockholm (SE)**

The title of the invention has been amended (Guidelines for Examination in the EPO, A-III, 7.3).

(54) **Optical transducer for sensing the position or motion of a writing head relative to a reference.**

(57) The invention relates to an optical transducer for position or motion. The transducer comprises a light source (10), two optical measuring screens (21 and 22) and a light receiver. The measuring screens are arranged to enter different positions relative to one another in the beam path between light source and light receiver. Each measuring screen has first portions forwarding light from the light source to the light receiver and second portions not forwarding light from the light source to the light receiver. The measuring screens have different pitches and the width of the second portions of each measuring screen is substantially larger than the width of the first portions of the second measuring screen. When the measuring screens are in a first position relative to one another the light receiver can receive light from the light source via at least two first portions in each measuring screen at the same time. When the measuring screens are in a second position relative to one another the second portions shield the light receiver completely from the light of the light source.

Fig.1

EP 0 300 985 A1

# Description

## Transducer for sensing the position or motion of a writing head relative to a reference

### Technical Field

This invention relates to an optical position transducer for sensing the position of a writing head relative to a reference. The transducer is primarily intended to sense at matrix printers the position or motion of a writing head in a certain predetermined direction in connection with writing in lines on a recording medium. However, it cannot be quite excluded that the position transducer can also be used in another connection.

### State of Art

It is known to have a light source and a light receiver as well as two optical measuring screens in optical transducers for sensing the position or motion of a body relative to a reference. The light receiver is arranged to receive light from the light source via the measuring screens. The measuring screens are arranged to enter in the beam path between the light source and the light receiver different positions relative to one another corresponding to the position of the body relative to the reference. Each measuring screen has first and second portions with different properties. The first portions forward possibly incident light from the light source to the light receiver and they can be reflective or transparent. The second portions do not forward possibly incident light from the light source to the light receiver and they cannot be reflective or transparent. The measuring screens may have different pitches and the second portions on one of the measuring screens may have a larger efficient width in the direction in which the screens move relative to one another than the efficient width of the first portions of the second measuring screen. The amount of light received by the light receiver from the light source varies with the mutual position of the measuring screens.

Furthermore, in transducers as above it is known to design and place the light source and the light receiver as well as the measuring screens relative to one another according to the so-called multi-window principle in such a way that the light receiver can receive light from the light source via two or more first portions in each measuring screen simultaneously as the first portions of one measuring screen is in a first position relative to the first portions of the other measuring screen. Moreover, it is known per se to design and place the light source and the light receiver as well as the measuring screens relative to one another in such a way that the second portions of the measuring screens in the beam path together can shield substantially completely the light receiver from the light of the light source in the beam path when the second portions of one measuring screen are in a second position relative to the second portions of the other measuring screen.

In order to get a high resolution of optical transducers with light source and light receiver as well as optical measuring screens it is known to provide the measuring screens with a small pitch and to have the pitch of one measuring screen differ comparatively little from the pitch of the other measuring screen. It is also known to provide such transducers with more than one light receiver and to treat electric output signals from the light receivers electronically, see for example SE 329271.

In order to reduce the sensitivity of the optical transducers to angular changes and twisting and to vibrations perpendicularly to the relative direction of motion of the measuring screens it is further known to arrange the measuring screens on each their screen carrier. The screen carriers are arranged so that one thereof has a stationary position relative to a reference and the other moves with the writing head. The screen carriers bear against one another all the time during the relative motion of the measuring screens. The distance between the measuring screens will then be substantially constant and independent of vibrations perpendicularly to the relative direction of motion of the measuring screens. In this way the transducer can be made insensitive to such vibrations.

### Summary of the invention

It is desired that transducers of position or motion of writing heads in matrix printers etc. should satisfy certain demands as far as resolution and accuracy are concerned. Such transducers must also stand vibrations deriving i.a. from movements occurring in writing with the writing head. The transducers must also be enough insensitive to dust and other particles that may occur in their surroundings when writing with the writing head.

Optical transducers of the current type where the measuring screens are arranged on each their screen carrier, said screen carriers bearing against one another all the time, certainly can be made relatively insensitive to vibrations perpendicular to the relative motion of the screen carriers when the writing head is moving. However, the screen carriers bearing against one another during their relative motion can lead to an undesired wear. Moreover, there is a risk of deteriorated optical properties of the measuring screens and influence by the motion of the writing head from the transducer. Thus, screen carriers bearing against one another all the time can be a problem.

In certain transducers embodied according to the multi-window principle, especially such where the measuring screens have been formed with small pitches and the difference between the pitches of the measuring screens has been selected to be small to get a high resolution, there have been problems of getting an enough stable lower reference level of the amount of light reaching a light receiver. The reference level has varied i.a. due to the fact that it has been difficult to keep all relevant distances constant along the whole range of measurement. An enough stable lower reference level of the amount of light is important not the least in transducers having several light receivers and electronic treatment of electric signals from the light receivers.

It is an object of this invention to solve at least certain of the above problems in connection with optical transducers and to provide an optical transducer capable of satisfying the demands on resolution, accuracy and insensitivity to certain kinds of vibrations.

Another object of this invention is to achieve an optical transducer with a relatively simple light source and optics in relation to the resolution and accuracy of the transducer.

It is a further object of this invention to achieve an optical transducer having such a light source and such measuring screens and such geometry that the transducer advantageously can have two or more light receivers, the electric output signals of which are treated electronically for an increased resolution.

At least certain of the above-mentioned problems are solved and at least certain of the above demands on the transducer satisfied at an optical position transducer according to the invention through a special design of the light source, the measuring screens and each light receiver relative to each other and through a certain placement of the light source, the measuring screens and each light receiver relative to one another. The design and placement are such that the measuring screens when being in a certain mutual position can shield substantially completely a light receiver from the light of the light source. By a special design of the screens and placement of the respective light receiver relative to the screens the screens can be at a certain distance from one another and move somewhat to/from each other and still completely shield a light receiver from the light of the light source. In this way wear of the screen carriers can be avoided as they need not bear against one another. Moreover, the transducer stands certain vibrations as the measuring screens can be allowed to move somewhat to/from one another without the stable longer reference level of the amount of light being lost.

What more concretely expressed is characteristic of an optical transducer according to the invention and preferred embodiments thereof is apparent from the independent claim and the dependent claims, respectively.

Further advantages of an optical transducer according to the invention and especially with preferred embodiments are apparent from the description of preferred embodiments.

## Brief description of drawings

Fig. 1 illustrates in a much simplified form how an optical transducer may be arranged to sense the position or motion of a writing head in a matrix printer etc.

Fig. 2 illustrates optical and geometric relations in an optical transducer according to the multi-window principle and with measuring screens according to the present invention.

Fig. 3 illustrates in a somewhat simplified form certain effects of undesired motion of measuring screens in a transducer according to the multi-window principle with each of the measuring screens embodied in a way known per se.

Fig. 4 illustrates in a somewhat simplified form certain effects of undesired motion of measuring screens in a transducer according to Fig. 2 with measuring screens embodied according to the invention.

Fig. 5 illustrates a simplified block diagram of means for treatment of signals from more than one light receiver.

## Embodiments

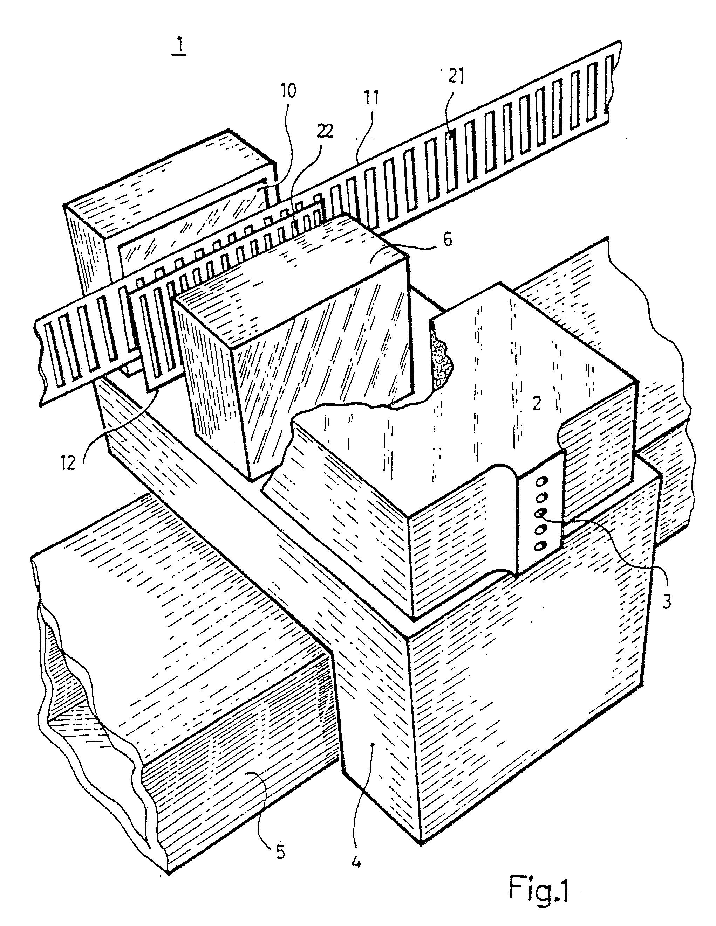

In order to illustrate how an optical position transducer according to the invention may be arranged in a matrix printer parts of a matrix printer are illustrated in Fig. 1 with a much simplified design. The matrix printer 1 has a writing head 2 with a number of indicated writing members 3 for writing on a recording medium not shown in Fig. 1. The writing head 2 is arranged on a carriage 4. The carriage is movably mounted on a carriage carrier 5 by bearing means not shown in Fig. 1. The carriage carrier has an elongated form of a substantially rectangular cross-section. By moving the carriage along the carriage carrier lengthwise of the carriage carrier the writing head can be moved relative to the recording medium lengthwise of the carriage carrier. The recording medium can be fixed relative to the carriage carrier by conventional means not shown in Fig. 1 and be moved relative to the carriage carrier in a direction perpendicular to the longitudinal direction of the carriage carrier.

For sensing the position and motion of the carriage and the writing head lengthwise of the carriage carrier the matrix printer has an optical transducer with signal treating means The optical transducer comprises a light source with a light-emitting surface 10, two screen carriers 11 and 12 with each their measuring screens 21 and 22, respectively, and three light receivers not shown in Fig. 1 in a housing 6. The light source, a screen carrier 12 and the housing 6 of the light receivers are carried by the carriage 4 and accompany the carriage and the writing head in their motion relative to the carriage carrier 5 and the recording medium. The other screen carrier 11 is fixed relative to the carriage carrier and therefore does not accompany the carriage in its motion relative to the carriage carrier. When the writing head is moved relative to the recording medium and the carriage carrier the screen carrier 12 with its measuring screen 22 will move correspondingly in the longitudinal direction of the carriage carrier relative to the other screen carrier 11 with its measuring screen 21.

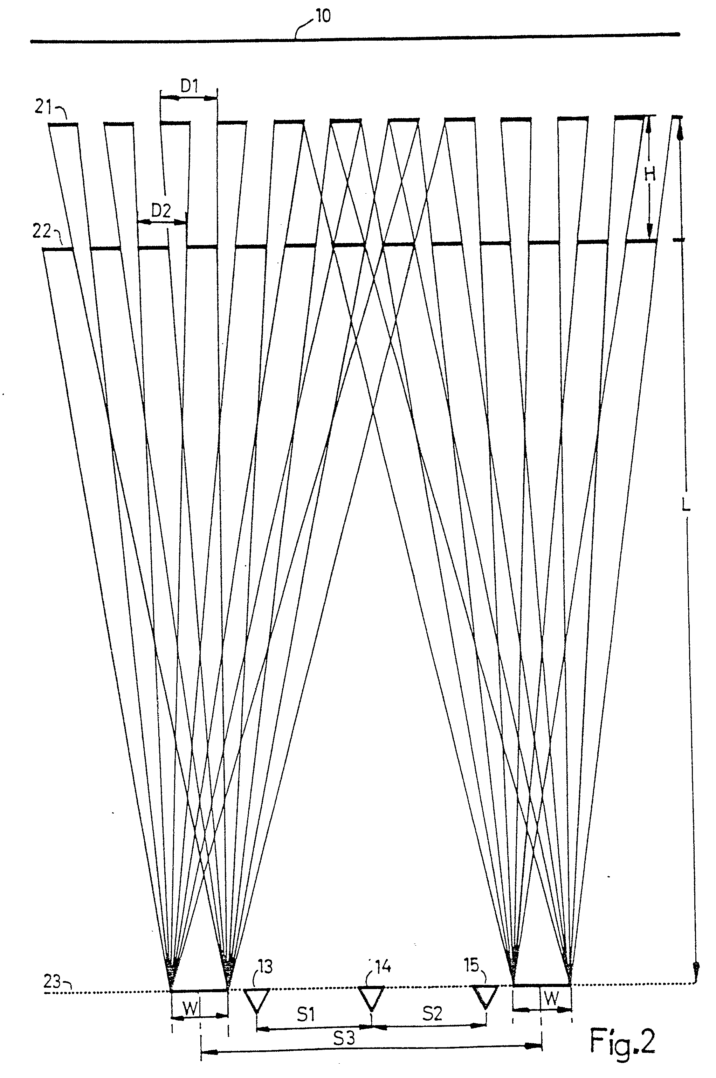

The light receivers are arranged to receive light from the light source. The measuring screens 21 and 22 on the screen carrier are located in the beam path between the light source and the light receiver. Each measuring screen comprises a plurality of substantially rectangular portions oriented in parallel and having different properties. The size of the portions has been greatly exaggerated in Fig. 1 in order that their form and orientation might appear more clearly. The size of the light-emitting surface of the light source has also been greatly exaggerated in Fig. 1 in order that it should appear more distinctly that the width of the surface 0 is several times larger than a rectangular portion of each the measuring screen. The pitches of the measuring screens are different and the widths of the portions in the relative direction of motion of the measuring screens are such that the light amount received by a light receiver from the light source varies with the mutual position of the measuring screens in the axial direction of the screen carrier. This is explained more closely in connection with Fig. 2.

In Fig. 2 a light-emitting surface 10 of a light source, a first measuring screen 21, a second measuring screen 22 and three light receivers 13, 14 and 15, respectively, are illustrated in a somewhat simplified form and greatly enlarged. The first measuring screen 21 has a number of first portions of the width A1 and a number of second Portions of the width B1 located in one plane. The second measuring screen 22 has a number of first portions of the width A2 and a number of second portions of the width B2 located in a plane parallel to the plane of the first measuring screen. The first portions A1 and A2 in each measuring screen are transparent to the light of the light source and therefore forward possibly incident light from the light source towards the light receivers. However, the second portions B1 and B2 in each measuring screen are not transparent to the light of the light source and do not forward possibly incident light from the light source towards the light receivers.

The pitch D1 of the first measuring screen, i.e. the sum of the width of a first and a second portion in the first measuring screen, is greater than the pitch D2 of the second mesuring screen, i.e. the sum of the width of a first and a second portion in the second measuring screen. The width of a second portion in the first measuring screen, i.e. B1, is greater than the width of a first portion in the second measuring screen, i.e. A2. Moreover, the width of a second portion in the second measuring screen, i.e. B2, is greater than the width of a first portion in the first measuring screen, i.e. A1.

The light source has a light-emitting surface 10 of a width C in the relative direction of motion of the screens which is several times as large as the width of a second portion in any of the measuring screens, i.e. B1 or B2. Each Part of the light emitting surface 10 of the light source emits light in different directions with the main portion of the light intensity concentrated within a solid angle of about $20° - 50°$. The light source can therefore illuminate several successive first portions and intermediate second portions of the first measuring screen.

The light from the light source forwarded by the first measuring screen comes in towards the second measuring screen. Depending on the mutual position of the measuring screens in a direction parallel to their planes and the arrow P1 or P2 in Fig. 2 more or less light may pass the second measuring screen via its first portions. At least one shadow is formed behind each second portion in the second measuring screen. Two or more shadows in different diverging directions may form from at least certain second portions in the second measuring screen in dependence on the solid angle within which the light source emits light and on the relative position of the first portions of the first measuring screen. Only one shadow has been drawn in Fig. 2 from most of the second portions of the second measuring screen. However, two shadowss have been drawn from two of the second portions. As is apparent from Fig. 2, the shadows coincide on certain places in a plane remote from the measuring screens. It can be shown with simple geometric calculations that even when at least two shadowss from each second portion in the second measuring screen are formed the shadowss coincide on certain places in a plane that is parallel to the plane of the measuring screens. If the distances between the plane of the measuring screens is H and the distance between the plane of the first measuring screen and the plane where the shadowss coincide is L the theoretical relation $L = (D1/D1-D2) \times H$ applies. If the difference between the pitches of the measuring screens is small relative to the pitches L may be several times as great as H.

It is apparent from Fig. 2 that the width W of the shadows in the plane where they coincide are as large and larger than the width of the second portions in the first and second measuring screens. It can be shown in theory that the following relation applies between the width W of the coinciding shadows and the width of the portions of the measuring screens: $W = (D1B2-D2A1)/D1-D2))$. If the difference between the pitches of the measuring screens is small relative to the pitches W can be several times larger than B2.

As the shadows coincide in a certain plane images of the second portions of the second measuring screen are obtained in this plane. It can be said by this that a geometric focusing in an image plane located at the distance L from the first measuring screen and depending on the geometry of the measuring screens is obtained by means of one light source and two measuring screens of the current type. It is apparent from the above relations that neither the distance L, i.e. the position of the image plane, nor the size W of the shadows in the image plane depends on the relative position of the measuring screens in a direction parallel to the plane of the measuring screens and the plane of the paper in Fig. 2. On the other hand, the position of each shadow in the image plane in a direction parallel to the plane of the measuring screens and the plane of the paper in Fig. 2 is dependent on the mutual position of the measuring screens in the same direction. Thus, when moving one measuring screen relative to the second measuring screen in such a direction, for example according to the arrow P1 in Fig. 2, the shadows will be moved in the image plane without their size being changed.

Light from the light source will reach between the shadows in the image plane via the first portions of the two measuring screens. It can be shown in theory that the light reaching in the image plane has an intensity varying with the distance to the nearest shadow in the image plane. The light receivers 13, 14, 15 are arranged to receive light substantially only within each their area in the image plane which areas are not wider than the width W of a shadow in the image plane. Each light receiver is arranged to generate an output signal representing the intergral of the light intensity across the area within which the light receiver receives light. The centre distance S1 between the areas where the light receivers 13 and 14 receive light in the image plane is substantially the same as the centre distance S2 between the areas in the image plane where the light receivers 14 and 15 receive light. This centre distance is substantially equal to one third of the centre distance S3 between the two shadows in the image plane located closest to each other.

As each light receiver receives light only from an area in the image plane that is less than the size of a shadow in the image plane the light receiver will not be reached by any light from the light source when the measuring screens are in a certain mutual position. In this position the light receiver is completely shielded from the light of the light source by the second portions of the measuring screens. Two or more of the light receivers cannot be completely shadowed at the same time, i.e. completely shielded from the light of the light source by the second portions of the measuring screens, with the indicated centre distances between the light sources. When the measuring screens are moved relative to one another in the direction of the arrow P1 or the arrow P2 due to the motion of the carriage relative to the carriage carrier the light receivers can therefore only be shadowed by the measuring screens one at a time. It will receive light of a varying strength between two successive shadowings of a certain light receiver. Due to the symmetrical placement of the light receivers 13 and 15 relative to the light receiver 14 and the indicated size of the distance between the light receivers relative to the distance between adjacent shadows in the image plane a certain relation will be present between the strength of the light reaching one light receiver and the strengths of the light reaching the other light receivers.

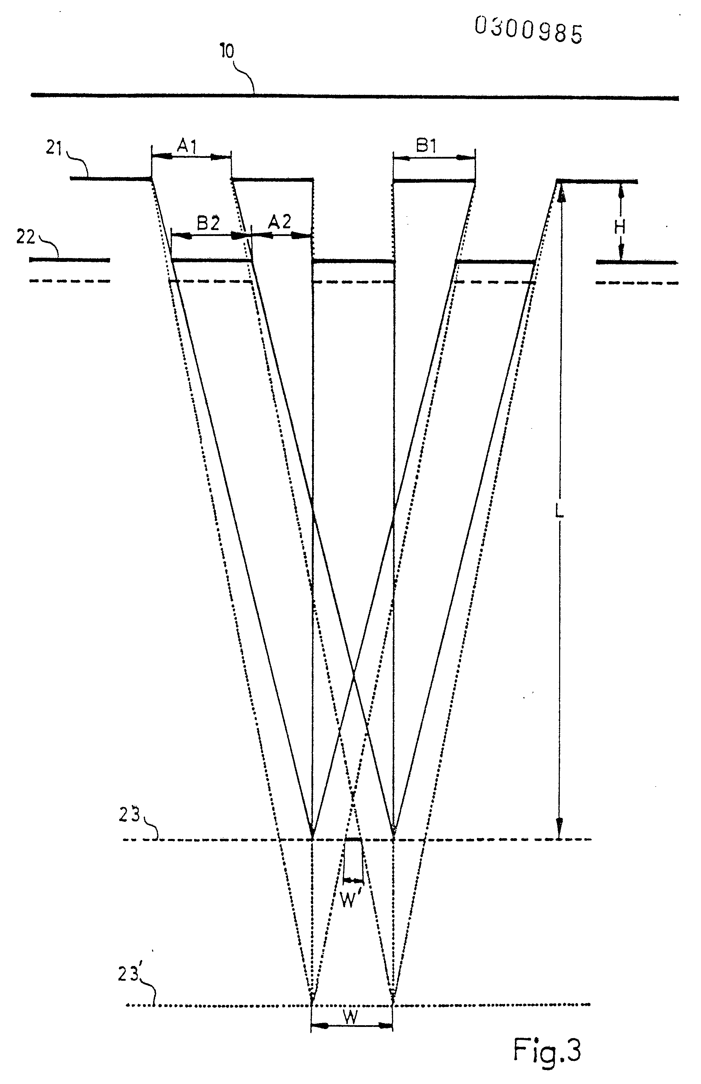

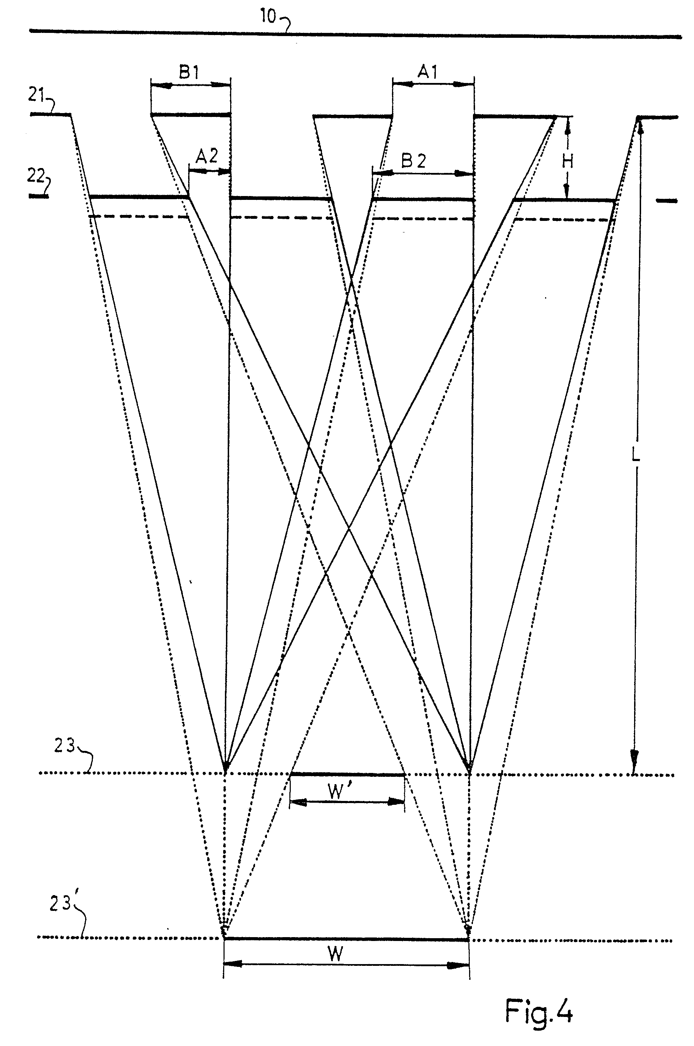

If only one of the measuring screens in Fig 2 should be moved in a direction towards or away from the second measuring screen, for instance on account of vibrations deriving from the writing of the writing head or the motion of the carriage the distance H between the planes of the measuring screens should be changed. As the distance L between the first measuring screen and the image plane is directly dependent on this distance H the image plane should then be moved towards or away from the plane of the first measuring screen. If the light receivers were fixedly mounted so that they could not be moved towards and away, respectively, from the first measuring screen the light receivers might get at a distance from the image plane. As is apparent from Fig. 2 the size of the common part of the coinciding shadows at a distance from the image plane is reduced by the distance from the image plane. At an enough great distance from the image plane the shadows have no longer any common part. If the common part of the shadows in the plane where the light receivers are will be less than the area within which a light receiver receives light each light receiver, irrespective of the relative position of the measuring screens in the directions of the arrow P1 and P2, will receive at least some light from the light source. In that case the stable lower reference level of the light intensity will get lost. According to the invention this can be counteracted at least at minor movements of one measuring screen in a direction towards or away from the other measuring screen. This will now be explained in connection with Figs. 3 and 4.

Minor portions of two measuring screens 21 and 22 in each their plane at a desired distance H from one another is illustrated in full lines in Fig. 3. Only three of the first portions and four adjacent second portions of the measuring screen 21 are illustrated in Fig. 3. Only five of the second portions and four intermediate first portions of the measuring screen 22 are illustrated in Fig. 3. The first and the second portions of the measuring screen 21 have each the same width as the second portions in the measuring screen 22. On the other hand, the first portions in the measuring screen 22 are narrower than the first and the second portions in the measuring screen 21. The measuring screens 21 and 22 are illuminated by light from a surface 10 of a light source. The light from the light source passing the measuring screen 21 comes on the measuring screen 22, shadows forming behind the second portions of the measuring screen 22. It has been illustrated in Fig. 3 in full lines how a shadow from each of the three second portions of the measuring screen 22 extend convergently from the measuring screen 22 until the shadows coincide completely in an image plane 23. As the first portions of the measuring screen 21 have the same width as the second portions of the measuring screen 22 the shadows have the same and a constant width in each plane parallel to the plane of the measuring screens. Thus, in the image plane the common width W of the coinciding shadows is equal to the width of a second portion of the measuring screen 22.

It is also illustrated in Fig. 3 in dashed lines how the measuring screen 22 has been slightly moved temporarily in a direction away from the measuring screen 21. In the position illustrated in dashed lines in Fig. 3 the measuring screen 22 is thus further away from the measuring screen 21 than the desired distance H. It has been illustrated in Fig. 3 in dashed lines how a shadow from each of the second portions of the measuring screen 22 extends when the measuring screen is in the dashed position. Like the shadows shown in full lines the dashed shadows extend convergently from the measuring screen 22 until the dashed shadows coincide completely in a plane 23'. However, this plane 23' in which the dashed shadows coincide is at a greater distance from the measuring screen 21 than the image plane 23 of the shadows shown in full lines. The dashed shadows coincide only partly in the image plane of the shadows shown in full lines. The width of the coinciding part of the dashed shadows is only a fraction of the width of a second portion of the measuring screen 22. If the measuring screen 22 should have been moved somewhat instead from its desired position at the distance H from the measuring screen 21 towards the measuring screen 21 the shadows from the second portions of the measuring screen 22 should have coincided completely in a plane closer to the measuring screen 21 than the image plane 23. Also in this case the shadows in the image plane 23 should only have coincided partly, the coinciding portion being much narrower than a second portion of the measuring screen 22. At enough great motions of the measuring screen 22 from its desired position in a direction away from or towards the measuring screen 21 the shadows from the second portions of the measuring screen 22 will not coincide in the image plane 23 so that they have any common part.

Positions of two measuring screens 21 and 22 as well as shadows from the second portions of the measuring screen 22 are illustrated in Fig. 4 by full and dashed lines in a way as in Fig. 3. The distances between the measuring screens 21 and 22 in Fig. 4 are the same as the distances between the measuring screens 21 and 22 in Fig. 3. Moreover, the measuring screen 21 has the same pitch in Fig. 4 as in Fig. 3 while the measuring screen 22 in Fig. 4 has the same pitch as in Fig. 3. As distinguished from Fig. 3 the width of the second portions of each measuring screen in Fig. 4 is however substantially larger than the width of the first portions of the second measuring screen, i.e. B1 > A2 and B2 > A1. Accordingly the shadows drawn in full lines in the original image plane 23 from each second portion of the measuring screen 22 will be much wider than a second portion of the measuring screen 22, i.e. W will be much greater than B2. In the dashed case in Fig. 4, when the measuring screen 22 is moved somewhat in a direction away from the measuring screen 21 the coinciding part of the shadows in the original image plane 23 will therefore be much greater than in the dashed case in Fig. 3. If instead the measuring screen 22 in Fig. 4 is moved somewhat from its desired position drawn in full lines towards the measuring screen 21 the common part of the shadows in the original image plane 23 will be correspondingly much greater than in a corresponding motion of the measuring screen 22 in Fig. 3. When the measuring screens are formed according to Fig. 4, i e. so that B1 is substantially greater than A2 simultaneously as B2 is substantially greater than A1 the coinciding part of the shadowss in the original image plane 23 can be made wider than the area within which a light receiver receives light at moderate motions of either the measuring screen in a direction towards or away from the second measuring screen. Despite a certain vibratory motion of the measuring screen 22 towards/from the measuring screen 21 there are in such a case relative positions of the measuring screens in the direction of the arrows where a light receiver is completely shielded from the light of the light source. The stable lower reference level of the light intensity then need not get lost. As a certain mutual motion of the measuring screens can be accepted the screen carriers need not bear against one another all the time.

The optical transducer and the measuring screens according to Figs. 1, 2 and 4 are intended for sensing the position of the writing head along a straight line. Therefore the portions of each measuring screen are arranged in a plane along a straight line. However, the invention is also applicable to sensing a position along a curved curve, the portions of at least one measuring screen being arranged along a curve curved in a corresponding way, for example an arc of a circle.

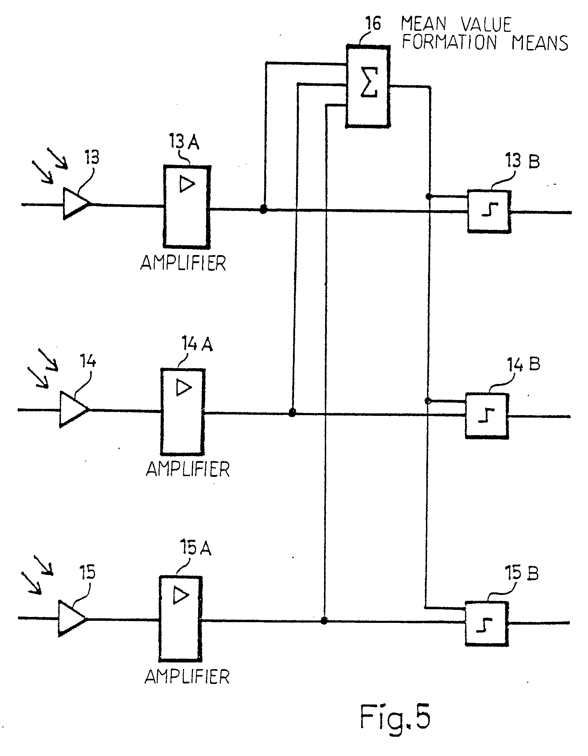

Fig. 5 illustrates a simplified block diagram of means for treating signals from three light receivers arranged according to Fig. 2 in an optical position transducer according to the invention. The three light receivers 13, 14 and 15 are arranged to generate at each their output an electric signal representing the amount of light received by the respective light receiver. The output of each light receiver is connected to an input of one of three amplifiers 13A, 14A and 15A. Each amplifier is arranged to generate an output signal at its output corresponding to the input signal from a light receiver. The outputs of the amplifier are connected to each their input of a means 16 forming a threshold value. The means forming the threshold value is arranged to generate at its output an electric signal representing a mean value of the input signals at its three inputs. The output of the means forming the threshold value is connected to an input of each one of three comparing means 13B, 14B and 15B. Each comparing means has also an input connected to each its amplifier 13A, 14A and 15A. Each comparing means is arranged to generate at its output a binary signal, the value of which depends on the fact whether the signal from an amplifier represents a major or minor amount of light than the signal from the means 16 forming the threshold value. In summary, the means in Fig. 5 thus generate three binary output signals in dependence on whether the three light receiving means receive each by themselves more or less light than the mean value.

Of course it is possible to have more than three light receivers in an optical transducer according to the invention. In such cases the means for treating signals from the light receivers can have as many amplifiers as the number of light receivers. The number of comparing means can also be equal to the number of light receivers whereas one single means forming mean values can be sufficient.

**Claims**

1. Optical position transducer for sensing the position or motion of a writing head (2) relative to a reference (5), said transducer comprising a light source (10) and two optical measuring screens (21, 22) and a first light receiver (14), said first light receiver being arranged to receive light from the light source via the measuring screens, said measuring screens being arranged to enter different positions relative to one another in the beam path between the light source and the light receiver corresponding to the position of the writing head relative to the reference, said measuring screens each having first and second portions with different optical properties, said first portions forwarding possibly incident light from the light source to the light receiver, said second portions substantially not forwarding possibly incident light from the light source to the light receiver, said measuring screens having different pitches (D1, D2), said second portions on a first measuring screen having a larger efficient width (B1) in the direction in which the measuring screens move relative to one another than the width (A2) of the first portions of the second measuring screen, said light source and said light receiver as well as said measuring screens being so designed and disposed relative to one another that the light receiver can receive light from the light source via at least two first portions in each measuring screen simultaneously as the first portions of one measuring screen is in a first position relative to the first portions of the second measuring screen in the beam path, said light source and said light receiver as well as said measuring screens, further, being so designed and disposed relative to one another that the second portions of the measuring screens in the beam path can shield together the light receiver from the light of the light source in the beam path substantially completely when the second portions of one measuring screen is in a second position relative to the second portions of the second measuring screen, **characterized** in that the second portions of the second measuring screen have a substantially larger efficient width (B2) in the direction in which the measuring screens move relative to one another than the efficient width (A1) of the first portions of the first measuring screen and that the portions of one measuring screen are at an efficient distance (H) in the beam direction from the portions of the second measuring screen of at least the same order as the efficient width of one of the portions in either measuring screen.

2. The transducer of claim 1, **characterized** in that the light source is arranged to illuminate at least three successive first portions and two intermediate second portions in at least one of the measuring screens by means of light.

3. The transducer of claim 1 or 2, **characterized** in that the light receiver is arranged to receive light substantially only in the geometric image plane (23) of the measuring screens.

4. The transducer of any one of claims 1-3, **characterized** by further at least two light receivers (13, 15) arranged to receive light from the light source substantially only in the geometric image plane (23) of the measuring screens at predetermined efficient distances (S1, S2) from the first light receiver, said predetermined distances and further light receivers being such that the light receivers are shielded substantially completely, one at a time in a certain order, from the light of the light source by the second portions of the measuring screens when the measuring screens are moved relative to one another, and that the predetermined distances and the further light receivers are such that at least two of the light receivers can receive light at the same time from the light source via at least two first portions in each measuring screen.

5. The transducer of claim 4, **characterized** in that the light receivers are at a distance (L) from the measuring screens which are great both relative to the pitch (D1, D2) of each the measuring screen and relative to the efficient distance (H) between the portions of the measuring screens.

6. The transducer of claim 4 or 5, **character ized** in that each light receiver is arranged to receive light from the light source in a gap in the image plane (23) of the measuring screens, said gap being somewhat narrower than the true shadow in the image plane of a second portion in one of the measuring screens illuminated by the light source through the second measuring screen.

7. The transducer of any one of claims 4-6, **characterized** in that the light source, one of the measuring screens and the light receivers (13, 14, 15) are arranged so that they accompany the movement of the writing head in a certain direction and that the second measuring screen is arranged to have a stationary position relative to the reference.

8. The transducer of any one of claims 1-7, **characterized** in that the light source as seen from the screens has a light-emitting surface (10) with an efficient width in the relative direction of motion of the measuring screens that is several times larger than the width (B1 or B2) of a second portion in any one of the measuring screens.

9. The transducer of any one of claims 1-8, **characterized** in that the measuring screens are arranged on each their screen carrier (21, 22), which screen carriers can move in the area between the light source and the light receiver a little towards and away from one another in the beam direction.

Fig.1

0300985

Fig.2

0300985

0300985

Fig.3

0300985

Fig.4

Fig.5

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | US-A-4 176 276 (KAUL ET AL)<br>* Whole document * | 1 | G 01 B 11/02<br>G 01 D 5/38 |
| | --- | | |
| A | US-A-3 388 262 (T STUTZ)<br>* Whole document * | | |
| | --- | | |

TECHNICAL FIELDS SEARCHED (Int. Cl.4)

G 01 B
G 01 D

The present search report has been drawn up for all claims

| Place of search | Date of completion of the search | Examiner |
|---|---|---|
| STOCKHOLM | 19-08-1988 | JOSEFSSON I. |